# EUROPEAN PATENT APPLICATION

(11) **EP 1 932 606 A1**
(43) Date of publication of application: **18.06.2008**
(21) Application number: 07122681.5
(22) Date of filing: 07.12.2007
(51) Int. Cl.: B22D 31/00

(54) **Casting finishing device**

(30) Priority: 14.12.2006 JP 2006336936
(71) Applicant: Shigayamashita Co., Ltd., Higashiomi-shi Shiga 527-0055 (JP)
(72) Inventor: Ichihashi, Kaoru c/o SHIGAYAMASHITA CO., LTD., Higashiomi-Shi Shiga 527-0055 (JP)
(74) Representative: Sajda, Wolf E.

(57) **Abstract**

Problem: Provision of a finishing device which is capable of performing tasks with ease and which has an articulated structure having increased mechanical strength of its joints.

Means to Solve the Problem: In a finishing device for finishing a casting (W) having a complicated shape by removing undesired matter which is deposited or formed on the casting, such as casting sand, irregularities derived from a pouring gate and a feeder head, burrs and the like by means of a numerical control (NC) mechanism for an articulated structure, the device comprises: a jig unit (A) for positioning of the casting (W) to be finished in a position that facilitates machining; a tool unit (B) for applying necessary machining to the positioned casting (W) by operation of a tool; and a control unit (C) for comprehensively interpolation-controlling the jig unit (A) and the tool unit (B).

## Description

### Technical Field

The present invention relates to a casting finishing device for finishing various castings as workpieces having complicated shapes by removing undesired matter deposited or formed on such workpieces in preparation of the workpieces by casting of aluminum, iron or the like, such as casting sand, irregularities derived from pouring gates and feeder heads, burrs and the like. In particular, it relates to a casting finishing device for finishing a casting having a complicated shape, wherein the device has an increased mechanical strength of joint or articulated shafts in its articulated structure, i.e., a multijoint structure, and which is so constructed as to be compact.

Various auto parts, for example, a cylinder head, a cylinder block, an intake manifold and the like are prepared by casting aluminum, iron or the like thereinto. The castings or workpieces obtained by such a preparation have complicated shapes, and thereon, undesired matter such as casting sand, irregularities derived from a pouring gate and a feeder head, burrs and the like are deposited or formed. Accordingly, it is necessary that this undesired matter be removed from the workpieces to effect finishing.

In general, many castings have complicated shapes. Accordingly, in finishing of such castings, a machine tool is required to perform complicated motions, and thus numerically controlled (NC) machining is required.

As a general purpose casting finishing device, a 6-axial vertical articulated robot has previously been used widely. Since positions and postures of a 6-axial vertical articulated robot can be set freely, necessary finishing can be applied to a casting as a workpiece by means of a machine tool disposed on a fixed side with the workpiece held by the robot.

Alternatively, a machine tool and a casting or workpiece may be held by the robot and the fixed side, respectively. In casting finishing steps, a 6-axial vertical articulated robot of which positions and postures can arbitrarily set is very effective particularly in a burr removing step, because burrs are formed on various portions of the surface of the workpiece in random directions.

On the casting or workpiece, however, casting sand, burrs, irregularity of a pouring gate for casting and the like are deposited or formed, which have irregularities in shape. Accordingly, when the casting or workpiece is machined or transferred by a robot, an abnormal burr of the casting, workpiece or the like frequently interferes with a constituent of the machine tool or jig.

In such a case, since an ordinary 6-axial vertical articulated robot has a low joint mechanical strength, dislocation of a joint or articulated shaft is likely to occur and may cause a long-lasting time stop of a production line. This has prevented that operation rates of the production line can be increased. Further, backlashes in reduction gears used in the joints lower machining accuracy.

In general, when an articulated mechanism having a 6-axial degree of freedom is used as a numerically controlled (NC) mechanism, the mechanism is capable of performing arbitrary motions and thus is suitable for finishing of a casting having a complicated shape. However, in a case where the mechanism is composed of a single unit, the mechanism has a large size unless mechanical strength of joints of 4th, 5th and 6th shafts are set to be low, resulting in the large-sized device.

As a means to increase mechanical strength of joints, it suffices for the purpose that a large reduction gear be used in each of the joints to impart strength capable of overcoming forces exerted on the joints at the time of interference to the joints. However, if such a necessary mechanical strength is imparted to the joints, each of the joints has a large size and thus the device as a whole has a very large size and an increased weight. This prevents rapid movement of the device, and accordingly a time period for finishing is prolonged. In consequence, the device takes a large installation space and has a poor productivity, and the cost thereof is high. Furthermore, backlashes in the reduction gears used in the joints lower machining accuracy.

As a device which uses a large reduction gear in each of the joints to impart mechanical strength capable of overcoming forces exerted on the joints at a time of interference to the joints, such a device has been provided where a jig section and a tool section are separately disposed. However, since no connective interpolation control is performed between the jig section and the tool section, it is difficult to teach a program for machining a workpiece to the device.
- Patent Document 1:: Japanese Unexamined Patent Publication No. Hei 7 (1995)-204 952
- Patent Document 2:: Japanese Registered Utility Model Publication No. 308 5828

### Disclosure of the Invention

### Problem to be Solved by the Invention

It is, therefore, a problem to be solved by the invention to provide, for finishing a casting having a complicated shape by removing undesired matter deposited or formed on the casting, such as casting sand, irregularities derived from a pouring gate and a feeder head, burrs and the like by means of a numerical control (NC) mechanism for an articulated mechanism or structure, a device for finishing such a casting having a complicated shape, which device is suitable to increase the mechanical strength of joint or articulated shafts of an articulated structure, and which is capable of solving the drawbacks inherent in the above-described known techniques.

### Means to Solve the Problem

To realize a compact size of a casting finishing device even if it uses reduction gears to which necessary strength is imparted, it is specific according to the invention in that an 8-axial vertical articulated structure is provided which is divided into two units, i.e., a combination of a jig unit having a multiaxial articulated structure for positioning a workpiece in a necessary position and posture, and a tool unit having a multiaxial articulated structure for moving a tool in a course necessary for machining the workpiece, wherein both of the jig unit and the tool unit are controlled by a single control unit to enable an interpolation movement of each of the units. Further, backlashes in the reduction gears used in the joints are eliminated to thereby improve machining accuracy.

### Effect of the Invention

The device of the present invention which has the above-described structure is constructed in such a manner that its articulated structure is divided into the jig unit and the tool unit which are disposed as separate units and interpolation-controlled by the control unit. Accordingly, the mechanical strength of the joint shafts of the articulated structure is increased, and the device is compact and capable of performing various tasks with ease, and machining accuracy is improved.

### Best Mode for Carrying Out the Invention

In the following, the present invention will be described in detail with reference to the accompanying drawings.

### Brief Description of Drawings

- Fig. 1: is a perspective view of an embodiment of the finishing device according to the present invention.
- Fig. 2: is a block diagram of the finishing device according to the present invention.
- Fig. 3: is a schematic view of the backlash eliminating unit of the reduction gear for the joint (articulated) shaft according to the present invention.

### Reference Signs

A = jig unit
B = tool unit
C = control unit
W = workpiece
1 = pivot shaft
2 = swinging shaft
3 = swinging shaft
4 = swinging shaft
5 = pivot shaft
6 = swinging shaft
7 = swinging shaft
8 = moving shaft
9 = workpiece clamping jig
10 = machine tool
11 = reduction gear backlash eliminating unit
12 = servo motor
13 = torque transmission gear
14 = output shaft
15 = torque actuator
16 = pinion

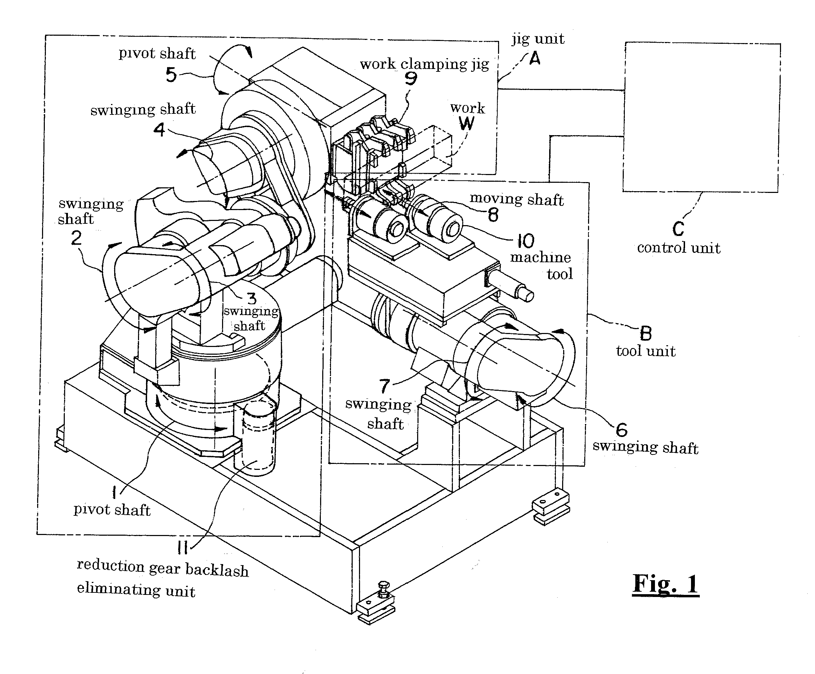

In Fig. 1, reference sign **W** represents a casting or workpiece to be machined, and specifically, it is one of various auto parts, for example, a cylinder head, a cylinder block, an intake manifold or the like. In general, such a workpiece **W** is prepared by casting aluminum or iron thereinto.

The casting or workpiece obtained by the preparation is likely to have a complicated shape, and undesired matter such as casting sand, irregularities derived from a pouring gate and a feeder head, burrs and the like can be deposited or formed thereon. Accordingly, the undesired matter is removed from the workpiece **W** by means of a numerical control (NC) mechanism having an articulated structure, i.e., a multijoint structure to effect finishing.

This articulated structure is an 8-axial structure. In other words, the articulated structure comprises the following components:
a pivot shaft 1 which pivots in the directions shown by a double-headed arrow,
a swinging shaft 2 which swings in the directions shown by a double-headed arrow,
a swinging shaft 3 which swings in the directions shown by a double-headed arrow,
a swinging shaft 4 which swings in the directions shown by a double-headed arrow,
a pivot shaft 5 which pivots in the directions shown by a double-headed arrow,
a pivot shaft 6 which pivots in the directions shown by a double-headed arrow,
a swinging shaft 7 which swings in the directions shown by a double-headed arrow, and a moving shaft 8 which moves in the directions shown by a double-headed arrow.

The articulated structure comprises a jig unit **A** and a tool unit **B** each of which has a selectable (variable) number of shafts according to the machining steps to be effected.

An essential feature of the present invention resides in that the device of the present invention comprises a jig unit **A** for clamping a casting or workpiece **W** with a workpiece clamping jig 9 in a posture which facilitates machining by pivoting the pivot shaft 1, swinging the swinging shafts 2, 3 and 4, and pivoting the pivot shaft 5, on the one hand, and a tool unit **B** for moving the workpiece **W** clamped by the workpiece clamping jig 9 by swinging the swinging shafts 6 and 7 and moving the moving shaft 8 to effect intended machining by operation of a tool 10 such as an end mill, a chip saw, a chipper or the like, on the other hand.

Furthermore, it is essential that the jig unit **A** and the tool unit **B** are separately disposed as separate units and that the jig unit **A** and the tool unit **B** are controlled by a control unit **C** for concurrently interpolation-controlling the jig unit **A** and the tool unit **B.**

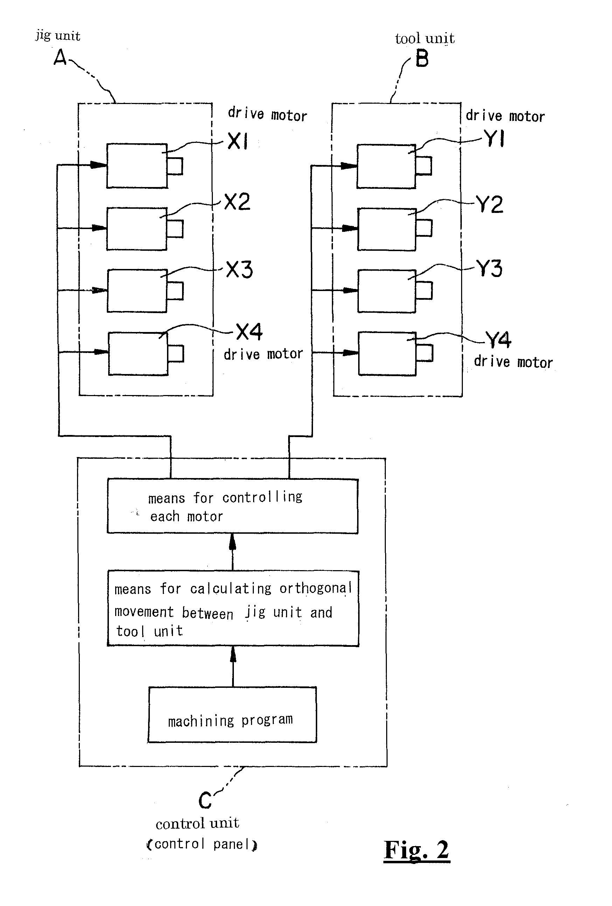

Fig. 2 is a flow diagram explaining the operation of the control unit **C** which controls the operations of the jig unit **A** and the tool unit **B.** In the manner as shown in Fig. 2, driving motors X1, X2, X3 and X4 of the jig unit **A** and driving motors Y1, Y2, Y3 and Y4 of the tool unit **B** are controlled.

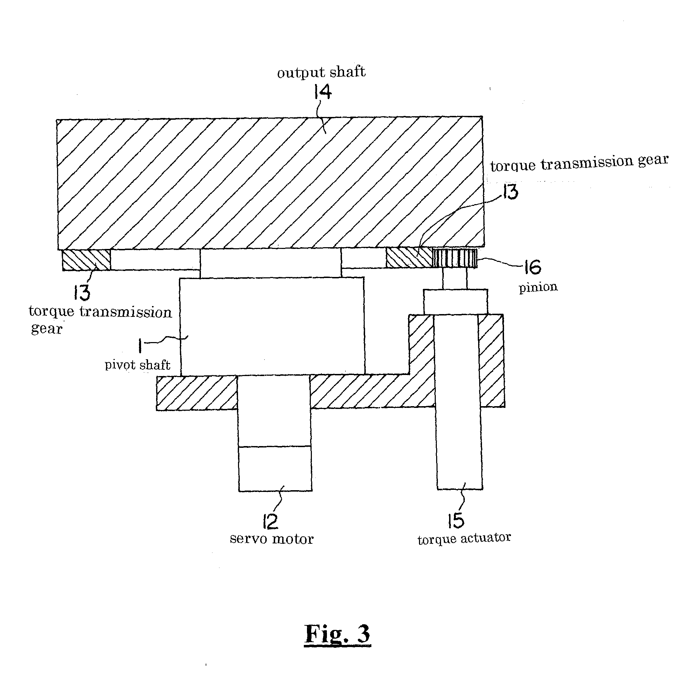

Fig. 3 shows the pivot shaft 1 as a typical joint shaft or articulated shaft of a backlash eliminating unit 11 for a reduction gear. The reduction gear constituting the joint shaft or articulated shaft has a backlash therein, and thus a rotational angular position of a servo motor 12 cannot accurately be reproduced. An angle of an output shaft is changed in an angular amount corresponding to the backlash. Accordingly, the accuracy of the angular position is lowered.

To eliminate such a backlash, a torque transmission gear 13 is attached to the output shaft, and a pinion 16 is attached to a tip of a torque actuator 15 on the fixed side relative to the output shaft. A pre-load is applied to the reduction gear from the pinion 16 through the torque transmission gear attached to the output shaft 14 to thereby eliminate the backlash which the reduction gear may have. In consequence, lowering of the accuracy due to the backlash can be prevented, and thus machining accuracy is improved. In the embodiment shown in Fig. 1, a backlash eliminating unit 11 is attached to each of the shafts 1, 3, 4, 5 and 7.

### Industrial Applicability

The device of the present invention is capable of performing various tasks with ease by virtue of increased mechanical strength of the joints in its articulated structure, i.e., multijoint structure and its capability of interpolation-moving, and it is compact. Accordingly, the device is applicable to finishing of a workpiece **W** having a complicated shape. Further, backlashes in reduction gears used in the joint or articulated shafts are eliminated to thereby enable machining accuracy to be improved. As described above, the casting finishing device of the present invention has high industrial applicability.

## Claims

1. A casting finishing device comprising:
- a jig unit (A) having a multiaxial articulated structure having its end provided with a jig (9) for positioning a workpiece (W);
- a tool unit (B) having a multiaxial articulated structure having its end provided with a tool (10) necessary for finishing the workpiece (W); and
- a control unit (C) for interpolation-controlling the two units (A, B).

2. The casting finishing device according to claim 1,
wherein a part or all of the joint or articulated shafts (1 to 8) are each provided with a reduction gear backlash eliminating mechanism (11).
